# EUROPEAN PATENT APPLICATION

(11) **EP 4 417 665 A1**
(43) Date of publication of application: **21.08.2024**
(21) Application number: 23866631.7
(22) Date of filing: 25.12.2023
(51) Int. Cl.: C09K 3/18

(54) **WATER-REPELLENT AND OIL-RESISTANT AGENT, TEXTILE PRODUCT, AND PRODUCTION METHOD FOR TEXTILE PRODUCT**

(30) Priority: 26.12.2022 JP 2022208714
(71) Applicant: Daikin Industries, Ltd., Osaka 530-0001 (JP)
(72) Inventor: The designation of the inventor has not yet been filed
(74) Representative: Hoffmann Eitle
(86) International application number: PCT/JP2023/046420
(87) International publication number: WO 2024/143275

(57) **Abstract**

A water-repellent and oil-resistant agent which has a high bio-based carbon content as the entire water-repellent and oil-resistant agent and furthermore which can impart sufficient water-repellency and oil-resistance to a treatment target is provided. A textile product in which the water-repellent and oil-resistant agent is attached, and a method for producing a textile product with the water-repellent and oil-resistant agent is provided. A water-repellent and oil-resistant agent comprising a non-fluorine compound as a main component and a liquid medium, wherein a bio-based carbon content according to ASTM D6866 is 40% or more. The non-fluorine compound has, for example, a hydrocarbon group having 7 to 40 carbon atom.

## Description

### Technical Field

The present invention relates to a water-repellent and oil-resistant agent, a textile product, and a method for producing a textile product.

### Background Art

As concerns about environmental problems have recently grown, needs for biodegradable materials and bio-based materials have also grown. For example, Patent Documents 1, 2 and 3 disclose an oil-resistant agent containing a bio-based material modified with a long chain alkyl group.

### Citation List

### Patent Document

Patent Document 1: WO 2022/065382
Patent Document 2: WO 2022/065384
Patent Document 3: WO 2022/065385

### Summary of Invention

### Technical Problem

Needs for biodegradable materials and bio-based materials are expected to much more grow hereafter. An object of the present disclosure is to provide a water-repellent and oil-resistant agent which has a high bio-based carbon content as the entire water-repellent and oil-resistant agent and which can impart sufficient water-repellency and/or oil-resistance to a treatment target.

### Solution to Problem

The present disclosure includes the following aspects.
<1> A water-repellent and oil-resistant agent containing a non-fluorine compound as a main component and a liquid medium, wherein
   a bio-based carbon content according to ASTM D6866 is 40% or more.
<2> The water-repellent and oil-resistant agent according to <1>, wherein the non-fluorine compound has a hydrocarbon group having 7 to 40 carbon atoms.
<3> The water-repellent and oil-resistant agent according to <1> or <2>, wherein the non-fluorine compound is a polymer containing a repeating unit derived from a (meth)acrylic monomer (a) having a hydrocarbon group having 7 to 40 carbon atoms and a (meth)acryloyl group.
<4> The water-repellent and oil-resistant agent according to <3>, wherein the (meth)acrylic monomer (a) is represented by the following general formula:

   CH₂=C(-X¹)-C(=O)-Y¹(R¹)ₖ

   wherein
   X¹ is a hydrogen atom, a monovalent organic group or a halogen atom other than fluorine,
   Y¹ is a group constituted from at least one or more selected from a di- to tetravalent hydrocarbon group having one carbon atom, -C₆H₄-, -O-, -C(=O)-, - S(=O)₂- or -NH-,
   each R¹ is independently a hydrocarbon group having 7 to 40 carbon atoms, and
   k is 1 to 3.
<5> The water-repellent and oil-resistant agent according to <3> or <4>, wherein the non-fluorine compound is a homopolymer of the (meth)acrylic monomer (a).
<6> The water-repellent and oil-resistant agent according to <3> or <4>, wherein the non-fluorine compound is a copolymer of the (meth)acrylic monomer (a) and any other monomer having a polymerizable group, and
   the any other monomer is at least one selected from the group consisting of (b) a (meth)acrylate ester monomer,
   (c) a non-fluorine crosslinkable monomer, and
   (d) an olefin monomer containing a halogen atom other than fluorine.
<7> The water-repellent and oil-resistant agent according to any of <1> to <6>, for application to a fiber structure.
<8> A method for producing a textile product, including applying the water-repellent and oil-resistant agent according to any of <1> to <7>, to a fiber structure, to attach the non-fluorine compound to the fiber structure.
<9> A textile product in which the non-fluorine compound contained in the water-repellent and oil-resistant agent according to any of <1> to <7> is attached.

### Advantageous Effects of Invention

The present disclosure provides a water-repellent and oil-resistant agent which has a high bio-based carbon content as the entire water-repellent and oil-resistant agent and furthermore which can impart sufficient water-repellency and oil-resistance to a treatment target. The present disclosure further provides a textile product in which the water-repellent and oil-resistant agent is attached, and a method for producing a textile product with the water-repellent and oil-resistant agent.

### Description of Embodiments

### <Water-repellent and oil-resistant agent>

The water-repellent and oil-resistant agent can impart at least one of water-repellency and oil-resistance, to a treatment target. The water-repellent and oil-resistant agent includes a non-fluorine compound as a main component and a liquid medium. The non-fluorine compound contains no fluorine atom. The water-repellent and oil-resistant agent according to the present disclosure (hereinafter, referred to as "non-fluorine water-repellent and oil-resistant agent".) includes a fluorine atom-free compound as a main component, and a product obtained by treatment with the non-fluorine water-repellent and oil-resistant agent can exhibit high water-repellency and oil-resistance. Such high water-repellency and oil-resistance are kept even after washing. A product treated with the non-fluorine water-repellent and oil-resistant agent according to the present disclosure has water-repellency and/or oil-resistance, in particular, high durability with respect to water-repellency.

The bio-based carbon content according to ASTM D6866 (Biobased Content) in the non-fluorine water-repellent and oil-resistant agent is 40% or more. The non-fluorine water-repellent and oil-resistant agent has a high bio-based carbon content as the entire water-repellent and oil-resistant agent, and thus contributes to realization of carbon neutrality and also results in a reduction in environmental load in disposal of a product obtained by treatment with the non-fluorine water-repellent and oil-resistant agent.

The bio-based carbon content can be said to be the proportion of the carbon mass of a biomass-derived component based on the total carbon mass in the non-fluorine water-repellent and oil-resistant agent. Specifically, the bio-based carbon content is the concentration of radiocarbon (C₁₄) in organic carbon included in the non-fluorine water-repellent and oil-resistant agent. Radiocarbon (C₁₄) is known to have a half-life of about 5700 years and be absent in fossil fuel. A higher bio-based carbon content means a larger amount of a biomass-derived component and a smaller amount of a fossil resource-based material typified by petroleum or the like in the non-fluorine water-repellent and oil-resistant agent. The bio-based carbon content is determined according to the ASTM D6866 B method.

A higher bio-based carbon content of the non-fluorine water-repellent and oil-resistant agent is more preferred. For example, the bio-based carbon content according to ASTM D6866 of the non-fluorine water-repellent and oil-resistant agent may be 50% or more, 60% or more, 63% or more, 65% or more, 67% or more, 69% or more, 70% or more, 80% or more, 90% or more, or 95% or more. The upper limit is not limited, and, for example, may be 99% or less, 95% or less, 90% or less, 80% or less, or 75% or less.

### (Non-fluorine compound)

The non-fluorine compound contains no fluorine atom. The non-fluorine compound is a main component in the non-fluorine water-repellent and oil-resistant agent. The main component means a component occupying 50% by mass or more of the mass of the solid content of the non-fluorine water-repellent and oil-resistant agent. For example, the content of the non-fluorine compound may be 50% by mass or more, 60% by mass or more, 70% by mass or more, 80% by mass or more, or 90% by mass or more of the mass of the solid content of the non-fluorine water-repellent and oil-resistant agent.

For example, the number average molecular weight (Mn) of the non-fluorine compound may be 1,000 or more and 1,000,000 or less. For example, the number average molecular weight (Mn) of the non-fluorine compound may be 3,000 or more, or may be 5,000 or more. For example, the number average molecular weight (Mn) of the non-fluorine compound may be 500,000 or less, or may be 200,000 or less. The number average molecular weight (Mn) of the non-fluorine compound is measured by GPC (gel permeation chromatography).

For example, the bio-based carbon content according to ASTM D6866 of the non-fluorine compound may also be 40% or more. For example, the bio-based carbon content according to ASTM D6866 of the non-fluorine compound may be 50% or more, 60% or more, 70% or more, 80% or more, 90% or more, or 95% or more.

The non-fluorine compound has, for example, a hydrocarbon group having 7 to 40 carbon atoms (hereinafter, referred to as "long chain hydrocarbon group".). For example, the non-fluorine compound may be a polymer having the long chain hydrocarbon group. The long chain hydrocarbon group allows excellent water-repellency and oil-resistance to be exhibited. Such water-repellency and oil-resistance due to the non-fluorine compound are equal to or more than those due to the fluorine compound.

The position of the long chain hydrocarbon group in the polymer is not limited. For example, the long chain hydrocarbon group may be placed as a side chain of the polymer, may be placed as one portion of dendron of a dendrimer structure polymer, may be placed at an end of a nurate backbone-containing polymer, or may be contained in a repeating unit of the polymer.

For example, the non-fluorine compound may be a polymer having the long chain hydrocarbon group as a graft chain. For example, the non-fluorine compound may be a reaction product of a monomer having the long chain hydrocarbon group, polyisocyanate, and any other monomer, if necessary, used. In this case, the long chain hydrocarbon group can be placed as one part of dendron of a dendrimer structure polymer, or can be placed at an end of a nurate backbone-containing polymer. For example, the non-fluorine compound may be a polymerized product of a monomer having the long chain hydrocarbon group and a polymerizable group, or a reaction product of a monomer having the long chain hydrocarbon group and a polymerizable group, and any other monomer having a polymerizable group. In such a case, the long chain hydrocarbon group is contained in a repeating unit of the polymer.

In particular, the long chain hydrocarbon group may be contained in a repeating unit of the polymer. In other words, for example, the non-fluorine compound may be a polymer containing a repeating unit derived from a monomer having the long chain hydrocarbon group and a polymerizable group.

Examples of the polymerizable group include an epoxy group, a glycidyl group, a vinyl group, an alkenyl group, an alkynyl group, a (meth)acryloyl group, an isocyanate group, a blocked isocyanate group, and an allyl group. In particular, the polymerizable group may have an ethylenically unsaturated double bond, or, for example, may be a (meth)acryloyl group. The non-fluorine compound may or may not contain a urethane bond, an amide bond, a urea bond, a sulfonyl bond, or a sulfonylamide bond.

The "(meth)acryloyl group" means an acryloyl group or a methacryloyl group. The "(meth)acrylate" means acrylate or methacrylate.

In particular, for example, the non-fluorine compound may be a polymer containing a repeating unit derived from (a) a (meth)acrylic monomer having the long chain hydrocarbon group and a (meth)acrylic group. For example, the non-fluorine compound may be a homopolymer of the (meth)acrylic monomer (a).

### (Meth)acrylic monomer (a)

The (meth)acrylic monomer (a) (hereinafter, sometimes simply referred to as "monomer (a)".) has the long chain hydrocarbon group and a (meth)acrylic group. The monomer (a) is represented by, for example, the following general formula:

CH₂=C(-X¹)-C(=O)-Y¹(R¹)ₖ

wherein
X¹ is a hydrogen atom, a monovalent organic group or a halogen atom other than fluorine,
Y¹ is a group constituted from at least one or more selected from a di- to tetravalent hydrocarbon group having one carbon atom, -C₆H₄-, -O-, -C(=O)-, - S(=O)₂- and -NH-,
each R¹ is independently a hydrocarbon group having 7 to 40 carbon atoms, and
k is an integer of 1 to 3.

In X¹, examples of the monovalent organic group include a methyl group, a substituted or unsubstituted benzyl group, a substituted or unsubstituted phenyl group, and a cyano group, and examples of the halogen atom other than fluorine include a chlorine atom, a bromine atom, and an iodine atom. For example, X¹ may be a hydrogen atom, a methyl group or a chlorine atom, or may be a hydrogen atom.

The valency of the hydrocarbon group having one carbon atom contained in Y¹ is di- to tetravalent, and, for example, may be divalent. Examples of the hydrocarbon group having one carbon atom include -CH₂-, -CH= (which does not mean a double bond) providing a branched structure, or -C= (which does not mean a triple bond) providing a branched structure.

For example, Y¹ may be -Y'-, -Y'-Y'-, -Y'-C(=O)-, -C(=O)-Y'-, -Y'-C(=O)-Y'-, -Y'-R'-, -Y'-R'-Y'-, -Y'-R'-Y'-C(=O)-, -Y'-R'-C(=O)-Y'-, -Y'-R'-Y'-C(=O)-Y'-, or -Y'-R'-Y'-R'- (wherein Y' is a direct bond, -O-, -NH- or -S(=O)₂-, R' is -(CH₂)ₘ- (m is an integer of 1 to 5) or -C₆H₄- (phenylene group).).

Specific examples of Y¹ include -O-, -NH-, -O-C(=O)-, -C(=O)-NH-, -NH-C(=O)-, -O-C(=O)-NH-, -NH-C(=O)-O-, -NH-C(=O)-NH-, -O-C₆H₄-, -O-(CH₂)ₘ-O-, -NH-(CH₂)ₘ-NH-, -O-(CH₂)ₘ-NH-, -NH-(CH₂)ₘ-O-, -O-(CH₂)ₘ-O-C(=O)-, -O-(CH₂)ₘ-C(=O)-O-, -NH-(CH₂)ₘ-O-C(=O)-, -NH-(CH₂)ₘ-C(=O)-O-, -O-(CH₂)ₘ-O-C(=O)-NH-, -O-(CH₂)ₘ-NH-C(=O)-O-, -O-(CH₂)ₘ-C(=O)-NH-, -O-(CH₂)ₘ-NH-C(=O)-, -O-(CH₂)ₘ-NH-C(=O)-NH-, -O-(CH₂)ₘ-O-C₆H₄-, -O-(CH₂)ₘ-NH-S(=O)₂-, - O-(CH₂)ₘ-S(=O)₂-NH-, -NH-(CH₂)ₘ-O-C(=O)-NH-, -NH-(CH₂)ₘ-NH-C(=O)-O-, - NH-(CH₂)ₘ-C(=O)-NH-, -NH-(CH₂)ₘ-NH-C(=O)-, -NH-(CH₂)ₘ-NH-C(=O)-NH-, - NH-(CH₂)ₘ-O-C₆H₄-, -NH-(CH₂)ₘ-NH-C₆H₄-, -NH-(CH₂)ₘ-NH-S(=O)₂-, or -NH-(CH₂)ₘ-S(=O)₂-NH- (wherein m is 1 to 5, particularly 2 or 4.).

In particular, for example, Y¹ may be -O-, -NH-, -O-(CH₂)ₘ-O-C(=O)-, -O-(CH₂)ₘ-NH-C(=O)-, -O-(CH₂)ₘ-O-C(=O)-NH-, -O-(CH₂)ₘ-NH-C(=O)-O-, -O-(CH₂)ₘ-NH-C(=O)-NH-, -O-(CH₂)ₘ-NH-S(=O)₂-, -O-(CH₂)ₘ-S(=O)₂-NH-, -NH-(CH₂)ₘ-NH-S(=O)₂-, or -NH-(CH₂)ₘ-S(=O)₂-NH- (wherein m is an integer of 1 to 5, particularly 2 or 4.). For example, Y¹ may be -O- or -O-(CH₂)ₘ-NH-C(=O)-, or may be -O-(CH₂)ₘ-NH-C(=O)-. Y¹ is not necessarily the hydrocarbon group having one carbon atom.

For example, the hydrocarbon group in R¹ may be an aliphatic hydrocarbon group, may be a saturated long chain hydrocarbon group, or may be an alkyl group. For example, the number of carbon atoms in R¹ may be 10 or more, 12 or more, 14 or more, 16 or more, 18 or more, or 20 or more. For example, the number of carbon atoms in R¹ may be 40 or less, 35 or less, 30 or less, 25 or less, 22 or less, 20 or less, or 18 or less. For example, the number of carbon atoms in R¹ may be 10 or more and 30 or less, or may be 12 or more and 30 or less.

The monomer (a) is used singly or in combinations of two or more kinds thereof.

The monomer (a) can be produced by a known method, for example, dehydration reaction of a long chain aliphatic alcohol and (meth)acrylic acid, or transesterification reaction of a long chain aliphatic alcohol and (meth)acrylate ester. The long chain aliphatic alcohol can be produced by, for example, a reduction method with fat having a high bio-based carbon content, as a raw material, or a Ziegler method with ethylene derived from a non-bio-based material, as a raw material. A long chain aliphatic alcohol obtained by any of such methods is commercially available.

The "bio-based material" refers to an organic compound having a bio-based carbon content of 1% or more. The "non-bio-based material" refers to an organic compound having a bio-based carbon content of less than 1%.

For example, the bio-based carbon content according to ASTM D6866 of the monomer (a) may be 40% or more. For example, the bio-based carbon content according to ASTM D6866 of the non-fluorine compound may be 50% or more, 60% or more, 70% or more, 80% or more, 90% or more, or 95% or more.

### Monomers (b) to (d)

For example, the non-fluorine compound may be a copolymer of the monomer (a) and any other monomer having a polymerizable group. For example, the non-fluorine compound may be a random copolymer or a block copolymer of these monomers. For example, the non-fluorine compound may be such a random copolymer from the viewpoint of oil-resistance.

Examples of such any other monomer having a polymerizable group include at least one selected from the group consisting of
(b) a (meth)acrylate ester monomer,
(c) a non-fluorine crosslinkable monomer, and
(d) an olefin monomer containing a halogen atom other than fluorine.

### (Meth)acrylate ester monomer (b)

The (meth)acrylate ester monomer (b) (hereinafter, sometimes simply referred to as "monomer (b)".) is an acrylic compound other than the monomer (a). Examples of the monomer (b) include at least one of
(b1) a (meth)acrylate ester monomer having an aliphatic hydrocarbon group, and
(b2) a (meth)acrylate ester monomer having a cyclic hydrocarbon group.

### (Meth)acrylate ester monomer having aliphatic hydrocarbon group (b1)

The (meth)acrylate ester having an aliphatic hydrocarbon group (b1) (hereinafter, sometimes simply referred to as "monomer (b1)".) easily makes texture of a treatment target soft. The aliphatic hydrocarbon group in the monomer (b1) may form an alcohol residue. The monomer (b1) also contains no fluorine atom.

The monomer (b1) is represented by, for example, the following general formula:

CH₂=C(-A¹¹)-C(=O)-O-A¹²

wherein
A¹¹ is a hydrogen atom or a methyl group, and
A¹² is a linear or branched aliphatic hydrocarbon group having 1 to 40 carbon atoms.

For example, A¹² may be a linear aliphatic hydrocarbon group. For example, A¹² may be a linear or branched saturated aliphatic hydrocarbon group, or may be a linear or branched alkyl group. For example, the number of carbon atoms in A¹² may be 10 or more, or may be 18 or more. For example, the number of carbon atoms in A¹² may be 28 or less. For example, the number of carbon atoms in A¹² may be 18 to 28, may be 18, or may be 22.

Specific examples of the monomer (b1) include lauryl (meth)acrylate, cetyl (meth)acrylate, stearyl (meth)acrylate, and behenyl (meth)acrylate.

The monomer (b1) is used singly or in combinations of two or more kinds thereof.

### (Meth)acrylate ester monomer having cyclic hydrocarbon group (b2)

The (meth)acrylate ester monomer having a cyclic hydrocarbon group (b2) (hereinafter, sometimes simply referred to as "monomer (b2)".) can improve processing stability, and/or can enhance water-repellency of a treatment target. The monomer (b2) also contains no fluorine atom.

### A homopolymer of the monomer (b2) desirably has a high melting point (for example, 50°C or more, particularly 80°C or more).

The monomer (b2) is represented by, for example, the following general formula:

CH₂=C(-A ²¹)-C(=O)-O-A ²²

wherein
A²¹ is a hydrogen atom, a methyl group, a chlorine atom, a bromine atom, an iodine atom, a linear or branched alkyl group having 2 to 21 carbon atoms, a cyano group, a substituted or unsubstituted benzyl group, or a substituted or unsubstituted phenyl group, and
A²² is a cyclic hydrocarbon-containing group having 4 to 40 carbon atoms.

For example, A²¹ may be a hydrogen atom, a methyl group, a chlorine atom, a bromine atom, an iodine atom, or a cyano group, or may be a chlorine atom.

For example, A²² may be a saturated or unsaturated monocyclic group or polycyclic group. For example, A²² may be a saturated cyclic hydrocarbon group, or may be a saturated cycloaliphatic group. For example, the number of carbon atoms in the cyclic hydrocarbon group may be 6 or more, or may be 7 or more. For example, the number of carbon atoms in the cyclic hydrocarbon group may be 20 or less, may be 15 or less, or may be 12 or less. Examples of the cyclic hydrocarbon group include a cycloaliphatic group having 4 to 20 (in particular, 5 to 12) carbon atoms, an aromatic group having 6 to 20 carbon atoms, and an aliphatic group having 7 to 20 carbon atoms with an aromatic ring. Specific examples of the cyclic hydrocarbon group include a cyclohexyl group, a t-butylcyclohexyl group, an isobornyl group, a dicyclopentanyl group, and a dicyclopentenyl group. The cyclic hydrocarbon group may have a chain group (for example, linear or branched hydrocarbon group).

Specific examples of the monomer (b2) include cyclohexyl (meth)acrylate, t-butylcyclohexyl (meth)acrylate, benzyl (meth)acrylate, isobornyl (meth)acrylate, dicyclopentanyl (meth)acrylate, and dicyclopentenyl (meth)acrylate.

The monomer (b2) is used singly or in combinations of two or more kinds thereof.

### Non-fluorine crosslinkable monomer (c)

The non-fluorine crosslinkable monomer (c) (hereinafter, sometimes simply referred to as "monomer (c)".) can increase durability of water-repellency and oil-resistance of a treatment target. The monomer (c) contains no fluorine atom, and has at least two polymerizable groups described above and/or a reactive group. Examples of the reactive group include a hydroxyl group, a chloromethyl group, an amino group, and a carboxyl group.

The monomer (c) may have at least two ethylenically unsaturated double bonds (in particular, (meth)acryloyl groups), or may have at least one ethylenically unsaturated double bond and at least one reactive group.

For example, the monomer (c) may be mono(meth)acrylate, di(meth)acrylate or mono(meth)acrylamide having the reactive group. For example, the monomer (c) may be di(meth)acrylate. The monomer (c) may have a hydroxyl group and a vinyl group.

Specific examples of the monomer (c) include diacetone (meth)acrylamide, N-methylol (meth)acrylamide, hydroxyethyl (meth)acrylamide, hydroxymethyl (meth)acrylate, hydroxyethyl (meth)acrylate, 2,3-dihydroxypropyl (meth)acrylate, 3-chloro-2-hydroxypropyl (meth)acrylate, 2-acetoacetoxyethyl (meth)acrylate, butadiene, isoprene, chloroprene, vinyl monochloroacetate, vinyl methacrylate, glycidyl (meth)acrylate, 1,4-butanediol di(meth)acrylate, 1,6-hexanediol di(meth)acrylate, 1,9-nonanediol di(meth)acrylate, and neopentyl glycol di(meth)acrylate.

The monomer (c) is used singly or in combinations of two or more kinds thereof.

### Halogen atom-containing olefin monomer (d)

The halogen atom-containing olefin monomer (d) (hereinafter, sometimes simply referred to as "monomer (d)".) can impart higher durability of water-repellency and oil-resistance of a treatment target. The monomer (d) has, for example, 1 or more and 10 or less halogen atoms (chlorine atoms, bromine atoms or iodine atoms) other than a fluorine atom. For example, the number of carbon atoms in the olefin may be 2 to 20. For example, the number of carbon atoms in the olefin may be 5 or less.

The monomer (d) may have 1 or more and 10 or less halogen atoms other than a fluorine atom and have 2 to 20 carbon atoms. The monomer (d) may have 1 or more and 10 or less chlorine atoms and have 2 to 20 carbon atoms. The monomer (d) may have 1 or more and 5 or less chlorine atoms and have 2 to 5 carbon atoms.

Specific examples of the monomer (d) include vinyl halides (for example, vinyl chloride, vinyl bromide, and vinyl iodide), and vinylidene halides (for example, vinylidene chloride, vinylidene bromide, and vinylidene iodide). In particular, for example, the monomer may be vinyl chloride because water-repellency (in particular, durability of water-repellency) is higher.

The monomer (d) is used singly or in combinations of two or more kinds thereof.

### Any other monomer (e)

For example, the non-fluorine compound may be a copolymer of the monomer (a), at least one of the monomer (b), the monomer (c) and the monomer (d), and any other monomer (e) than these monomers (hereinafter, sometimes simply referred to as "monomer (e)".), or may be a copolymer of the monomer (a) and the monomer (e). The monomer (e) contains no fluorine atom, and has the above polymerizable group and reactive group in total of one or less.

Specific examples of the monomer (e) include ethylene, vinyl acetate, acrylonitrile, styrene, polyethylene glycol (meth)acrylate, polypropylene glycol (meth)acrylate, methoxypolyethylene glycol (meth)acrylate, methoxypolypropylene glycol (meth)acrylate, and vinylalkyl ether.

The monomer (e) is used singly or in combinations of two or more kinds thereof.

For example, the mass proportion Wa of a portion constituted by a repeating unit (a) derived from the monomer (a), in the non-fluorine compound, may be 2% by mass or more and 100% by mass or less. For example, the mass proportion Wa may be 10% by mass or more, 20% by mass or more, 30% by mass or more, 40% by mass or more, or 50% by mass or more, 60% by mass or more, 70% by mass or more, 75% by mass or more, 80% by mass or more, 85% by mass or more, or 90% by mass or more of the non-fluorine compound. For example, the mass proportion Wa may be 95% by mass or less, 80% by mass or less, 75% by mass or less, or 70% by mass or less of the non-fluorine compound.

In particular, for example, the mass proportion Wa of a portion constituted by a repeating unit (a) derived from the monomer (a) having a bio-based carbon content according to ASTM D6866 of 80% or more may be 2% by mass or more and 100% by mass or less. For example, the mass proportion Wa may be 10% by mass or more, 20% by mass or more, 30% by mass or more, 40% by mass or more, or 50% by mass or more, 60% by mass or more, 70% by mass or more, 75% by mass or more, 80% by mass or more, 85% by mass or more, or 90% by mass or more of the non-fluorine compound. For example, the mass proportion Wa may be 95% by mass or less, 80% by mass or less, 75% by mass or less, or 70% by mass or less of the non-fluorine compound.

For example, the mass proportion Wb of a portion constituted by a repeating unit (b) derived from the monomer (b) may be 0% by mass or more and 2,000% by mass or less under the assumption that the mass of the portion constituted by the repeating unit (a) is 100% by mass. For example, the mass proportion Wb may be 1% by mass or more, or may be 5% by mass or more. The mass proportion Wb may be 100% by mass or less, or may be 80% by mass or less.

For example, the mass proportions Wb1 and Wb2 of portions constituted by repeating units (b1) and (b2) derived from the monomers (b1) and (b2) may be each 0% by mass or more and 150% by mass or less under the assumption that the mass of the portion constituted by the repeating unit (a) is 100% by mass. For example, the mass proportions Wb1 and Wb2 may be each 1% by mass or more, or may be each 2% by mass or more. For example, the mass proportions Wb1 and Wb2 may be each 100% by mass or less, or may be each 50% by mass or less.

For example, the mass proportion Wc of a portion constituted by a repeating unit (c) derived from the monomer (c) may be 0% by mass or more and 50% by mass or less under the assumption that the mass of the portion constituted by the repeating unit (a) is 100% by mass. For example, the mass proportion Wc may be 1% by mass or more, or may be 2% by mass or more. For example, the mass proportion We may be 10% by mass or less, or may be 8% by mass or less.

For example, the mass proportion Wd of a portion constituted by a repeating unit (d) derived from the monomer (d) may be 0% by mass or more and 100% by mass or less under the assumption that the mass of the portion constituted by the repeating unit (a) is 100% by mass. For example, the mass proportion Wd may be 1% by mass or more, may be 2% by mass or more, or may be 3% by mass or more. For example, the mass proportion Wd may be 60% by mass or less, 30% by mass or less, 20% by mass or less, 10% by mass or less, 7% by mass or less, 5% by mass or less, or 3% by mass or less.

The monomer (d) easily makes water-repellency (in particular, durability of water-repellency) higher. On the other hand, for example, the mass proportion Wd of the monomer (d) may be lower because the bio-based carbon content of the water-repellent and oil-resistant agent is increased.

For example, the mass proportion We of a portion constituted by a repeating unit (e) derived from the monomer (e) may be 0% by mass or more and 100% by mass or less under the assumption that the mass of the portion constituted by the repeating unit (a) is 100% by mass. For example, the mass proportion We may be 1% by mass or more, or may be 2% by mass or more. For example, the mass proportion We may be 30% by mass or less, or may be 10% by mass or less.

For example, the Wb:Wc:Wd:We with respect to the mass proportions Wb, Wc, Wd and We may be 0 to 80% by mass : 0 to 10% by mass : 0 to 40% by mass : 0 to 20% by mass, may be 3 to 75% by mass : 0.5 to 5% by mass:2 to 30% by mass : 0 to 10% by mass, or may be 10 to 70% by mass : 0.8 to 3% by mass:5 to 25% by mass : 0 to 5% by mass.

For example, the mass ratio of the monomer (a), the monomer (b), the monomer (c), the monomer (d) and the monomer (e) loaded in production of the non-fluorine compound may be regarded as the mass proportions Wa, Wb, Wc, Wd and We.

The non-fluorine compound as a polymer can be produced by a usual polymerization method. Conditions of polymerization reaction may also be appropriately set. Examples of such a polymerization method include solution polymerization, suspension polymerization, and emulsion polymerization. In particular, for example, emulsion polymerization may be adopted. After the non-fluorine compound is produced by solution polymerization, removal of a solvent, and addition of a surfactant and water may be performed to provide an aqueous emulsion of the non-fluorine compound.

A method adopted in solution polymerization includes dissolving the above monomers in an organic solvent in the presence of a polymerization initiator, performing purging with nitrogen, and then heating and stirring the resulting solution at a temperature ranging of 30 to 120°C for 1 to 10 hours.

A method adopted in emulsion polymerization includes emulsifying the above monomers in water in the presence of a polymerization initiator and an emulsifier, performing purging with nitrogen, and then stirring the resulting emulsion at a temperature ranging of 50 to 80°C for 1 to 10 hours.

The chain transfer agent may be used in polymerization reaction. The molecular weight of the non-fluorine compound can be varied depending on the amount of use of the chain transfer agent.

### (Emulsifier)

The non-fluorine water-repellent and oil-resistant agent may include an emulsifier. For example, the bio-based carbon content according to ASTM D6866 of the emulsifier may be 40% or more. For example, the bio-based carbon content according to ASTM D6866 of the emulsifier may be 50% or more, 60% or more, 70% or more, 80% or more, 90% or more, or 95% or more.

Examples of the emulsifier include at least one or more selected from the group consisting of a nonionic surfactant, a cationic surfactant, an anionic surfactant, and an amphoteric surfactant. The non-fluorine water-repellent and oil-resistant agent may include a nonionic surfactant, and may include a nonionic surfactant and a cationic surfactant. When a treatment target is a fiber structure, the non-fluorine water-repellent and oil-resistant agent desirably includes a nonionic surfactant.

In the case of an emulsifier containing a long chain alkyl group, for example, the long chain alkyl group may be derived from a bio-based material, or may be derived from a non-bio-based material. For example, the emulsifier may be derived from either a bio-based material or a non-bio-based material. For example, the emulsifier may be a commercially available product.

### Nonionic surfactant

Examples of the nonionic surfactant include an ether compound, an ester compound, an ester ether compound, alkanolamide, polyhydric alcohol and amine oxide.

Examples of the ether compound include a compound having an oxyalkylene group (preferably, polyoxyethylene group).

Examples of the ester compound include an ester compound of alcohol and fatty acid. Examples of the alcohol include mono- to hexahydric (in particular, di-to pentahydric) alcohol having 1 to 50 carbon atoms (in particular, 10 to 30 carbon atoms). In particular, for example, the alcohol may be an aliphatic alcohol. Examples of the fatty acid include a saturated or unsaturated fatty acid having 2 to 50 carbon atoms, particularly 5 to 30 carbon atoms.

Examples of the ester ether compound include a compound obtained by adding an alkylene oxide (in particular, ethylene oxide) to an ester of an alcohol and a fatty acid. For example, the alcohol and the fatty acid may be the same as those exemplified as the raw material of the ester compound.

Examples of the alkanolamide include a reaction product of a fatty acid and an alkanolamine. For example, the alkanolamide may be a monoalkanolamide or a dialkanolamide. For example, the alkanolamine may be an alkanol having 1 to 3 amino groups and 1 to 5 hydroxyl groups and having 2 to 50, particularly 5 to 30 carbon atoms. For example, the fatty acid may be the same as those exemplified as the raw material of the ester compound.

Examples of the polyhydric alcohol include a di- to pentahydric alcohol having 10 to 50 carbon atoms.

Examples of the amine oxide include an oxide (for example, having 5 to 50 carbon atoms) of an amine (secondary amine or preferably tertiary amine).

The nonionic surfactant may have an oxyalkylene group (preferably polyoxyethylene group). For example, the number of carbon atoms in the alkylene group in the oxyalkylene group may be 2 to 10. For example, the number of oxyalkylene groups per nonionic surfactant molecule may be 2 to 100.

The nonionic surfactant is at least one selected from the group consisting of the ether compound, the ester compound, the ester ether compound, the alkanolamide, the polyhydric alcohol and the amine oxide, and may have an oxyalkylene group.

The nonionic surfactant is used singly or in combinations of two or more kinds thereof.

### Cationic surfactant

Examples of the cationic surfactant include an amine salt, a quaternary ammonium salt, and an oxyethylene-addition ammonium salt.

The cationic surfactant is represented by, for example, the following general formula:

R⁵¹-N⁺(-R⁵²)(-R⁵³)(-R⁵⁴)X⁻

wherein
R⁵¹, R⁵², R⁵³ and R⁵⁴ are each a hydrocarbon group having 1 to 30 carbon atoms, and
X is an anionic group.

R⁵¹, R⁵², R⁵³ and R⁵⁴ are each, for example, an alkyl group (methyl group, butyl group, stearyl group, palmityl group, or the like). X is, for example, halogen (chlorine or the like) or an acid (hydrochloric acid, acetic acid, or the like).

Specific examples of the cationic surfactant include amine salt-type surfactants such as an alkylamine salt, an aminoalcohol fatty acid derivative, a polyamine fatty acid derivative, and imidazoline; and quaternary ammonium salt-type surfactants such as a monoalkyltrimethylammonium salt, a dialkyldimethylammonium salt, an alkyldimethylbenzylammonium salt, a pyridinium salt, an alkylisoquinolinium salt, and benzethonium chloride. In particular, for example, the cationic surfactant may be a monoalkyltrimethylammonium salt (in particular, the number of carbon atoms in alkyl is 4 to 30).

For example, the cationic surfactant may be an ammonium salt. The ammonium salt is represented by, for example, the following general formula:

R⁶¹ₚ-N⁺R⁶²_{q}X⁻

wherein
R⁶¹ is an aliphatic hydrocarbon group having 12 or more carbon atoms,
R⁶² is a hydrogen atom, an alkyl group having 1 to 4 carbon atoms, a benzyl group, or a polyoxyethylene group,
X is a halogen atom or a fatty acid salt group having 1 to 4 carbon atoms,
p is 1 or 2,
q is 2 or 3, and
p + q is 4.

For example, the number of carbon atoms in R⁶¹ may be 50 or less, or may be 30 or less. For example, R⁶¹ may be linear, or may be branched. For example, R⁶¹ may be saturated or may be unsaturated.

The number of oxyethylene groups in the polyoxyethylene group in R⁶² is, for example, 1 to 50, and, for example, may be 2, or may be 3. For example, R⁶² may be CH₃ or may be C₂H₅.

For example, the halogen atom in X may be a chlorine atom.

Specific examples of the cationic surfactant as an ammonium salt include dodecyltrimethylammonium acetate, trimethyltetradecylammonium chloride, hexadecyltrimethylammonium bromide, trimethyloctadecylammonium chloride, (dodecylmethylbenzyl)trimethylammonium chloride, benzyldodecyldimethylammonium chloride, methyldodecyldi(hydropolyoxyethylene)ammonium chloride, benzyldodecyldi(hydropolyoxyethylene)ammonium chloride, and N-[2-(diethylamino)ethyl]oleamide hydrochloride.

The cationic surfactant is used singly or in combinations of two or more kinds thereof.

### Anionic surfactant

Examples of the anionic surfactant include fatty acid salts having 8 to 30 carbon atoms; alkyl sulfonic acids, and sulfonates such as alkylbenzene sulfonate, having an alkyl group having 8 to 30 carbon atoms; and sulfate ester salts such as an alkyl sulfate ester salt, having an alkyl group having 8 to 30 carbon atoms.

Specific examples of the anionic surfactant include sodium lauryl sulfate, triethanolamine lauryl sulfate, sodium polyoxyethylene lauryl ether sulfate, sodium polyoxyethylene nonyl phenyl ether sulfate, triethanolamine polyoxyethylene lauryl ether sulfate, sodium cocoyl sarcosinate, sodium N-cocoyl methyl taurine, sodium polyoxyethylene palm alkyl ether sulfate, sodium diether hexyl sulfosuccinate, sodium α-olefin sulfonate, sodium lauryl phosphate, and sodium polyoxyethylene lauryl ether phosphate.

The anionic surfactant is used singly or in combinations of two or more kinds thereof.

### Amphoteric surfactant

Examples of the amphoteric surfactant include alanines, imidazolinium betaines, amide betaines, and acetic acid betaines. Specific examples of the amphoteric surfactant include lauryl betaine, stearyl betaine, lauryl carboxymethyl hydroxyethyl imidazolinium betaine, lauryl dimethylaminoacetic acid betaine, and fatty acid amide propyl dimethylaminoacetic acid betaine.

The amphoteric surfactant is used singly or in combinations of two or more kinds thereof.

For example, the content of the emulsifier may be 0.1 parts by mass or more and 20 parts by mass or less based on 100 parts by mass of the non-fluorine compound. For example, the content of the emulsifier may be 0.2 parts by mass or more based on 100 parts by mass of the non-fluorine compound. For example, the content of the emulsifier may be 10 parts by mass or less based on 100 parts by mass of the non-fluorine compound.

For example, the proportion of the nonionic surfactant may be 5% by mass or more and 100% by mass or less based on the total amount of the emulsifier. For example, the proportion of the nonionic surfactant may be 10% by mass or more or may be 20% by mass or more based on the total amount of the emulsifier.

### (Liquid medium)

The non-fluorine water-repellent and oil-resistant agent includes a liquid medium. Examples of the liquid medium include water, an organic solvent, or a mixture of water and an organic solvent.

The non-fluorine water-repellent and oil-resistant agent is usually a solution or a dispersion. The non-fluorine compound is dissolved in an organic solvent in the solution. The non-fluorine compound is dispersed in an aqueous medium (water, or a mixture of water and an organic solvent) in the dispersion.

Examples of the organic solvent include esters (for example, esters having 2 to 30 carbon atoms, specifically, ethyl acetate or butyl acetate), ketones (for example, ketones having 2 to 30 carbon atoms, specifically, methyl ethyl ketone or diisobutyl ketone), alcohols (for example, alcohols having 1 to 30 carbon atoms, specifically, isopropyl alcohol), aromatic solvents (for example, toluene or xylene), and petroleum-based solvents (for example, alkanes having 5 to 10 carbon atoms, specifically, naphtha or kerosene).

For example, the liquid medium may be water, or a mixture of water and an organic solvent, or may be water. For example, the amount of the organic solvent in the mixture may be 30% by mass or less or 10% by mass or less based on the total amount of the liquid medium. For example, the amount of the organic solvent in the mixture may be 0.1% by mass or more based on the total amount of the liquid medium.

For example, the content of the liquid medium may be 0.2 parts by mass or more and 100 parts by mass or less based on 1 part by mass of the non-fluorine compound. For example, the content of the liquid medium may be 0.5 parts by mass or more or may be 1 part by mass or more based on 1 part by mass of the non-fluorine compound. For example, the content of the liquid medium may be 50 parts by mass or less or may be 20 parts by mass or less based on 1 part by mass of the non-fluorine compound.

### (Application)

The non-fluorine water-repellent and oil-resistant agent according to the present disclosure can be used in an external treatment agent (surface-treating agent) or an internal treatment agent. A product obtained by treating the non-fluorine water-repellent and oil-resistant agent has high water-repellency and/or oil-resistance. Therefore, the non-fluorine water-repellent and oil-resistant agent is utilized as a water-repellent and/or an oil-resistant agent. Furthermore, the non-fluorine water-repellent and oil-resistant agent can be utilized as a soil resistant agent, an oil-repellent, a soil release agent, a release agent or a mold release agent, or a component of such an agent. The water-repellent and oil-resistant agent can include the non-fluorine water-repellent and oil-resistant agent, the liquid medium, and any other component depending on an application.

Examples of an object to be treated with the non-fluorine water-repellent and oil-resistant agent include a fiber structure, leather, glass, stone, wood, fur, asbestos, brick, cement, metal, metal oxide, cast metal, plastics, and plaster. In particular, for example, the object may be a fiber structure.

### (Additive)

The external- or internal-treatment agent containing the non-fluorine water-repellent and oil-resistant agent may further include an additive. Examples of the additive include any other water-repellent and any other oil-repellent than the non-fluorine compound, a drying rate adjuster, a cross-linking agent, a film formation agent, a compatibilizer, an antifreezing agent, a viscosity regulator, an ultraviolet absorber, an antioxidant, a pH adjuster, an antifoaming agent, a texture modifier, a slippage modifier, an antistatic agent, a hydrophilizing agent, an antibacterial agent, a preservative agent, an insect repellent, an fragrant agent, and a flame retarder.

For example, the bio-based carbon content according to ASTM D6866 of the additive may also be 40% or more. For example, the bio-based carbon content according to ASTM D6866 of the additive may be 50% or more, 60% or more, 70% or more, 80% or more, 90% or more, or 95% or more.

### <Textile product>

A textile product is obtained by treating a fiber structure with the water-repellent and oil-resistant agent, or the external- or internal-treatment agent containing the water-repellent and oil-resistant agent (hereinafter, sometimes simply collectively referred to as "treatment agent".). The present disclosure includes a textile product to which the non-fluorine compound contained in the water-repellent and oil-resistant agent is attached. The "attach(ing)" refers to physical or chemical binding between the non-fluorine compound and the textile product.

### (Fiber structure)

The treatment target is a fiber structure. Examples of the fiber structure include a fiber itself; a thread, for example, a thread obtained by twisting at least one fiber: paper, for example, paper obtained by subjecting pulp to paper making; sliver, rove, a textile, a knit fabric or a nonwoven fabric formed by fiber or thread.

Examples of fiber species include animal and plant natural fibers such as pulp, cotton, linen, wool, and silk; synthetic fibers such as polyamide, polyester, polyvinyl alcohol, polyacrylonitrile, polyvinyl chloride, and polypropylene: semisynthetic fibers such as rayon and acetate: inorganic fibers such as a glass fiber, a carbon fiber, and an asbestos fiber; and any mixed fiber thereof. Examples of the pulp include bleached or unbleached chemical pulp such as kraft pulp or sulfite pulp; bleached or unbleached high-yield pulp such as ground pulp, mechanical pulp or thermomechanical pulp; and wastepaper pulp such as newspaper wastepaper, magazine wastepaper, cardboard wastepaper or deinking wastepaper.

Hereinafter, such "pulp" and "fiber structure including pulp" are collectively referred to as "paper substrate" for convenience. Such "other fiber" and "fiber structure with other fiber as a raw material" are collectively referred to as "cloth substrate" for convenience. A paper substrate treated with the water-repellent and oil-resistant agent or a treatment agent including the water-repellent and oil-resistant agent is referred to as "paper product", and a cloth substrate treated with the water-repellent and oil-resistant agent or a treatment agent including the water-repellent and oil-resistant agent is referred to as "cloth product".

### Paper substrate

For example, the paper substrate may be pulp, paper, paper pre-treated, or a formed article obtained by forming paper. Specific examples of the paper substrate include food packaging paper, a container made from paper, gypsum board base paper, coated base paper, medium-quality paper, general liners, cores, neutral pure white roll paper, neutral liner, anti-rust liner, metal interleaving paper, kraft paper, neutral printing and writing paper, neutral coated base paper, neutral PPC paper, neutral heat-sensitive paper, neutral pressure-sensitive base paper, neutral ink-jet paper and neutral information paper, and mold paper (mold container). The water-repellent and oil-resistant agent according to the present disclosure is suitably used particularly in food packaging paper.

### Cloth substrate

For example, the cloth substrate may be a fiber, a thread, sliver, rove, a textile, a knit fabric or a nonwoven fabric, or a cloth product obtained by cutting and, if necessary, pre-treating, swing and/or dyeing a textile, a knit fabric or a nonwoven fabric. Specific examples of the cloth product include clothes, bedclothes, various filters (for example, electrostatic filter), dust protective masks, and components for fuel cells (for example, gas diffusion electrode and gas diffusion support).

When the water-repellent and oil-resistant agent is used as an internal treatment agent, the amount of the non-fluorine compound attached may be, for example, 0.1 parts by mass or more, 0.5 parts by mass or more, 1 part by mass or more, 5 parts by mass or more, 10 parts by mass or more, 20 parts by mass or more, 30 parts by mass or more, or 40 parts by mass or more based on 100 parts by mass of the fiber structure (typically pulp). For example, the amount of the non-fluorine compound attached may be 100 parts by mass or less, 80 parts by mass or less, 60 parts by mass or less, 40 parts by mass or less, 20 parts by mass or less, or 10 parts by mass or less based on 100 parts by mass of the fiber structure.

When the water-repellent and oil-resistant agent is used in an external treatment agent, the amount of the non-fluorine compound attached may be, for example, 0.01 g/m² or more, 0.03 g/m² or more, 0.05 g/m² or more, 0.10 g/m² or more, 0.30 g/m² or more, or 0.50 g/m² or more. For example, the amount of the non-fluorine compound attached may be 5 g/m² or less, 3 g/m² or less, 2 g/m² or less, 1.5 g/m² or less, 0.50 g/m² or less, or 0.30 g/m² or less.

### <Method for producing textile product>

The present disclosure includes a method for producing a textile product. The textile product is produced by applying the non-fluorine water-repellent and oil-resistant agent to the fiber structure to attach the non-fluorine compound to the fiber structure. The textile product is, if necessary, subjected to various post-treatments.

### (Treatment method)

The non-fluorine water-repellent and oil-resistant agent is applied to the fiber structure by a conventionally known method. Thus, the non-fluorine water-repellent and oil-resistant agent (typically, non-fluorine compound) penetrates in the fiber structure, and/or attaches to a surface of the fiber structure. The "applying the non-fluorine water-repellent and oil-resistant agent" includes immersing the fiber structure in the non-fluorine water-repellent and oil-resistant agent or a treatment agent including the non-fluorine water-repellent and oil-resistant agent, and spraying or putting the non-fluorine water-repellent and oil-resistant agent or a treatment agent including the non-fluorine water-repellent and oil-resistant agent on the fiber structure. The "applying" includes mixing the non-fluorine water-repellent and oil-resistant agent to a pulp slurry.

The non-fluorine water-repellent and oil-resistant agent can be applied at various stages in the course of production of the fiber structure or during use of the fiber structure. For example, the non-fluorine water-repellent and oil-resistant agent may be applied in a drying step for production of the paper substrate. For example, the non-fluorine water-repellent and oil-resistant agent may be applied when the cloth substrate is washed or dry cleaned.

The concentration of the non-fluorine compound in the non-fluorine water-repellent and oil-resistant agent or a treatment agent including the non-fluorine water-repellent and oil-resistant agent is, for example, 0.01% by mass or more and 50% by mass or less. The concentration of the non-fluorine compound may be adjusted so that the amount of the non-fluorine compound attached is in the above range.

After the non-fluorine water-repellent and oil-resistant agent is applied, the fiber structure may be heated for removing the liquid medium contained in the non-fluorine water-repellent and oil-resistant agent or the treatment agent. A heating condition is 30°C or more (for example, 50 to 120°C) preferably under reduced pressure.

While embodiments are described above, it is to be understood that embodiments and various detailed modifications can be made without departing from the gist and scope of the claims.

### Examples

The present disclosure is specifically described with reference to Examples. It is noted that such description does not limit the present disclosure. Hereinafter, part(s), %, or ratio represents part(s) by mass, % by mass, or mass ratio, unless particularly noted. In Tables, the "Bio-based" means bio-based material-derived and the "Non-bio-based" means non-bio-based material-derived.

The bio-based carbon content was determined according to the ASTM D6866 B method.

### [Example 1]

### (1) Preparation of non-fluorine water-repellent and oil-resistant agent A

A 500-ml reaction flask was charged with 115 g of stearyl acrylate (StA, bio-based material-derived, bio-based carbon content 85%), 240 g of pure water, 27.0 g of tripropylene glycol, 4.0 g of stearyltrimethylammonium chloride (cationic surfactant, bio-based material-derived, bio-based carbon content 85%), 7.0 g of polyoxyethylene isotridecyl ether (nonionic surfactant, non-bio-based material-derived), and 0.23 g of acetic acid, and these were emulsified and dispersed with ultrasound under stirring at 60°C for 15 minutes. After the interior of the reaction flask was purged with nitrogen, a solution containing 0.24 g of lauryl mercaptan, 0.48 g of 2,2-azobis(2-amidinopropane)dihydrochloride (hereinafter, designated as V-50) and 9 g of water was added. Reaction was made at 60°C for 5 hours, thereby obtaining non-fluorine water-repellent and oil-resistant agent A (bio-based carbon content 70%, solid content concentration 30% by mass) as an aqueous dispersion of non-fluorine compound a (homopolymer of StA, bio-based carbon content 85%).

### (2) Preparation of treatment liquid A

5 g of non-fluorine water-repellent and oil-resistant agent A obtained, 1 g of a cross-linking agent, and 94 g of water were mixed, thereby obtaining treatment liquid A containing non-fluorine water-repellent and oil-resistant agent A.

### (3) Production of cloth product

A test cloth (polyester cloth) was immersed in treatment liquid A, and allowed to pass through a mangle (pickup rate 45%). Next, the fabric was thermally dried at 170°C for 1 minute, thereby obtaining a cloth product.

### [Example 2]

### (1) Preparation of non-fluorine water-repellent and oil-resistant agent B

A 500-mL autoclave was charged with 35 g of stearyl acrylate (StA, bio-based material-derived, bio-based carbon content 85%), 145 g of pure water, 3 g of polyoxyethylene isotridecyl ether (nonionic surfactant, non-bio-based material-derived), and 2 g of stearyltrimethylammonium chloride (cationic surfactant, bio-based material-derived, bio-based carbon content 85%), and these were emulsified and dispersed with ultrasound under stirring at 60°C for 15 minutes. After the interior of the autoclave was purged with nitrogen, 12.5 g of vinyl chloride (VCM) was injected under pressure and furthermore 0.5 g of 2,2-azobis(2-amidinopropane)dihydrochloride was added. Subsequently, reaction was made at 60°C for 20 hours, thereby obtaining non-fluorine water-repellent and oil-resistant agent B (bio-based carbon content 60%, solid content concentration 30% by mass) as an aqueous dispersion of non-fluorine compound b (copolymer of StA/VCM (= 80/20), bio-based carbon content 68%). The formulation (mass proportion with respect to each repeating unit) of non-fluorine compound b was matched with the loading ratio (mass) of monomers.

### (2) Preparation of treatment liquid B

5 g of non-fluorine water-repellent and oil-resistant agent B obtained, 1 g of a cross-linking agent, and 94 g of water were mixed, thereby obtaining treatment liquid B containing non-fluorine water-repellent and oil-resistant agent B.

### (3) Production of cloth product

A cloth product was obtained in the same manner as in Example 1 except that treatment liquid B was used instead of treatment liquid A.

### [Example 3]

### (1) Preparation of non-fluorine water-repellent and oil-resistant agent C

A 500-ml reaction flask was charged with 115 g of stearyl acrylate (StA, bio-based material-derived, bio-based carbon content 85%), 240 g of pure water, 27.0 g of tripropylene glycol, 4.0 g of alkyltrimethylammonium chloride (cationic surfactant, non-bio-based material-derived), 7.0 g of polyoxyethylene isotridecyl ether (nonionic surfactant, non-bio-based material-derived), and 0.23 g of acetic acid, and these were emulsified and dispersed with ultrasound under stirring at 60°C for 15 minutes. After the interior of the reaction flask was purged with nitrogen, a solution containing 0.24 g of lauryl mercaptan, 0.48 g of 2,2-azobis(2-amidinopropane)dihydrochloride (hereinafter, designated as V-50) and 9 g of water was added. Reaction was made at 60°C for 5 hours, thereby obtaining non-fluorine water-repellent and oil-resistant agent C (bio-based carbon content 67%, solid content concentration 30% by mass) as an aqueous dispersion of non-fluorine compound c (homopolymer of StA, bio-based carbon content 85%).

### (2) Preparation of treatment liquid C

5 g of non-fluorine water-repellent and oil-resistant agent C obtained, 1 g of a cross-linking agent, and 94 g of water were mixed, thereby obtaining treatment liquid C containing non-fluorine water-repellent and oil-resistant agent C.

### (3) Production of cloth product

A cloth product was obtained in the same manner as in Example 1 except that treatment liquid C was used instead of treatment liquid A.

### [Example 4]

### (1) Preparation of non-fluorine water-repellent and oil-resistant agent D

A 500-ml reaction flask was charged with 111 g of stearyl acrylate (StA, bio-based material-derived, bio-based carbon content 85%), 5 g of glycidyl methacrylate (GMA, non-bio-based material-derived), 240 g of pure water, 27.0 g of tripropylene glycol, 4.0 g of stearyltrimethylammonium chloride (cationic surfactant, bio-based material-derived, bio-based carbon content 85%), 3.8 g of polyoxyethylene alkenyl ether (nonionic surfactant 1, bio-based material-derived, bio-based carbon content 15%), 2.8 g of polyoxyethylene isotridecyl ether (nonionic surfactant 2, non-bio-based material-derived), and 0.23 g of acetic acid, and these were emulsified and dispersed with ultrasound under stirring at 60°C for 15 minutes. After the interior of the reaction flask was purged with nitrogen, a solution containing 0.24 g of lauryl mercaptan, 0.48 g of 2,2-azobis(2-amidinopropane)dihydrochloride (hereinafter, designated as V-50) and 9 g of water was added. Reaction was made at 60°C for 5 hours, thereby obtaining non-fluorine water-repellent and oil-resistant agent D (bio-based carbon content 69%, solid content concentration 30% by mass) as an aqueous dispersion of non-fluorine compound d (copolymer of StA/GMA, bio-based carbon content 81%).

### (2) Preparation of treatment liquid D

5 g of non-fluorine water-repellent and oil-resistant agent D obtained, 1 g of a cross-linking agent, and 94 g of water were mixed, thereby obtaining treatment liquid D containing non-fluorine water-repellent and oil-resistant agent D.

### (3) Production of cloth product

A cloth product was obtained in the same manner as in Example 1 except that treatment liquid D was used instead of treatment liquid A.

### [Example 5]

### (1) Preparation of non-fluorine water-repellent and oil-resistant agent E

A 500-mL autoclave was charged with 45.5 g of stearyl acrylate (StA, bio-based material-derived, bio-based carbon content 85%), 1.1 g of diacetone acrylamide (DAAM, non-bio-based material-derived), 138 g of pure water, 1.4 g of polyoxyethylene alkenyl ether (nonionic surfactant, bio-based material-derived, bio-based carbon content 15%), 3.8 g of sorbitan stearate (nonionic surfactant, bio-based material-derived, bio-based carbon content 95% or more), and 0.6 g of stearyltrimethylammonium chloride (cationic surfactant, bio-based material-derived, bio-based carbon content 85%), and these were emulsified and dispersed with ultrasound under stirring at 60°C for 15 minutes. After 0.44 g of lauryl mercaptan was added and the interior of the autoclave was purged with nitrogen, 16.7 g of vinyl chloride (VCM, non-bio-based material-derived) was injected under pressure and furthermore 0.66 g of 2,2-azobis(2-amidinopropane)dihydrochloride was added. Subsequently, reaction was made at 60°C for 5 hours and then unreacted vinyl chloride (VCM) was removed, thereby obtaining non-fluorine water-repellent and oil-resistant agent E (bio-based carbon content 60%, solid content concentration 30% by mass) as an aqueous dispersion of non-fluorine compound e (copolymer of StA/VCM/DAAM (= 78/20/2), bio-based carbon content 65%). The reaction rate of vinyl chloride (VCM), calculated from the chlorine content in such a polymer, was 70%.

### (2) Preparation of treatment liquid E

5 g of non-fluorine water-repellent and oil-resistant agent E obtained, 1 g of a cross-linking agent, and 94 g of water were mixed, thereby obtaining treatment liquid E containing non-fluorine water-repellent and oil-resistant agent E.

### (3) Production of cloth product

A cloth product was obtained in the same manner as in Example 1 except that treatment liquid E was used instead of treatment liquid A.

### [Example 6]

### (1) Preparation of non-fluorine water-repellent and oil-resistant agent F

A 500-mL autoclave was charged with 52.2 g of stearyl acrylate (StA, bio-based material-derived, bio-based carbon content 85%), 1.1 g of diacetone acrylamide (DAAM, non-bio-based material-derived), 138 g of pure water, 1.4 g of polyoxyethylene alkenyl ether (nonionic surfactant, bio-based material-derived, bio-based carbon content 15%), 3.8 g of sorbitan stearate (nonionic surfactant, bio-based material-derived, bio-based carbon content 95% or more), and 0.6 g of stearyltrimethylammonium chloride (cationic surfactant, bio-based material-derived, bio-based carbon content 85%), and these were emulsified and dispersed with ultrasound under stirring at 60°C for 15 minutes. After 0.44 g of lauryl mercaptan and the interior of the autoclave was purged with nitrogen, 7.2 g of vinyl chloride (VCM, non-bio-based material-derived) was injected under pressure and furthermore 0.66 g of 2,2-azobis(2-amidinopropane)dihydrochloride was added. Subsequently, reaction was made at 60°C for 5 hours and then unreacted vinyl chloride (VCM) was removed, thereby obtaining non-fluorine water-repellent and oil-resistant agent F (bio-based carbon content 64%, solid content concentration 30% by mass) as an aqueous dispersion of non-fluorine compound f (copolymer of StA/VCM/DAAM (= 89/9/2), bio-based carbon content 75%). The reaction rate of vinyl chloride (VCM), calculated from the chlorine content in such a polymer, was 70%.

### (2) Preparation of treatment liquid F

5 g of non-fluorine water-repellent and oil-resistant agent F obtained, 1 g of a cross-linking agent, and 94 g of water were mixed, thereby obtaining treatment liquid F containing non-fluorine water-repellent and oil-resistant agent F.

### (3) Production of cloth product

A cloth product was obtained in the same manner as in Example 1 except that treatment liquid F was used instead of treatment liquid A.

### [Comparative Example 1]

### (1) Preparation of fluorine-containing water-repellent and oil-resistant agent

A 500-ml reaction flask was charged with 102.1 g of CF₃CF₂-(CF₂CF₂)ₙ-CH₂CH₂OCOC((Cl)=CH₂ (n = 2.0, 13FClA), 194 g of pure water, 34.1 g of tripropylene glycol, 5.7 g of stearyltrimethylammonium chloride (cationic surfactant, bio-based material-derived, bio-based carbon content 85%), and 7.0 g of polyoxyethylene alkyl ether (nonionic surfactant, non-bio-based material-derived), and these were emulsified and dispersed with ultrasound under stirring at 60°C for 15 minutes. After the interior of the reaction flask was purged with nitrogen, a solution containing 0.4 g of an azo group-containing water-soluble polymerization initiator and 9 g of water was added. Reaction was made at 60°C for 20 hours, thereby obtaining a fluorine-containing water-repellent and oil-resistant agent (bio-based carbon content 3%, solid content concentration 30% by mass) as an aqueous dispersion of a fluorine-containing polymer.

### (2) Preparation of treatment liquid x1

5 g of the fluorine-containing water-repellent and oil-resistant agent obtained, 1 g of a cross-linking agent, and 94 g of water were mixed, thereby obtaining treatment liquid x1 including the fluorine-containing water-repellent and oil-resistant agent.

### (3) Production of cloth product

A cloth product was obtained in the same manner as in Example 1 except that treatment liquid x1 was used instead of treatment liquid A.

### [Comparative Example 2]

### (1) Preparation of petroleum-based water-repellent and oil-resistant agent

A 500-ml reaction flask was charged with 102.1 g of paraffin wax (melting point 50°C, bio-based carbon content of less than 1%), 194 g of pure water, 34.1 g of tripropylene glycol, 5.7 g of alkyltrimethylammonium chloride (cationic surfactant, non-bio-based material-derived), and 7.0 g of polyoxyethylene alkyl ether (nonionic surfactant, non-bio-based material-derived). These were emulsified and dispersed with ultrasound under stirring at 60°C for 15 minutes, thereby obtaining a petroleum-based water-repellent and oil-resistant agent (bio-based carbon content 0.2%, solid content concentration 30% by mass) as an aqueous dispersion of the paraffin wax.

### (2) Preparation of treatment liquid y1

5 g of the petroleum-based water-repellent and oil-resistant agent obtained, 1 g of a cross-linking agent, and 94 g of water were mixed, thereby obtaining treatment liquid y1 containing the petroleum-based water-repellent and oil-resistant agent.

### (3) Production of cloth product

A cloth product was obtained in the same manner as in Example 1 except that treatment liquid y1 was used instead of treatment liquid A.

### [Comparative Example 3]

### (1) Preparation of non-fluorine water-repellent and oil-resistant agent z1

A 500-ml reaction flask was charged with 115 g of stearyl acrylate (StA, non-bio-based material-derived, bio-based carbon content of less than 1%), 240 g of pure water, 27.0 g of tripropylene glycol, 4.0 g of stearyltrimethylammonium chloride (cationic surfactant, bio-based material-derived, bio-based carbon content 85%), 7.0 g of polyoxyethylene isotridecyl ether (nonionic surfactant, non-bio-based material-derived), and 0.23 g of acetic acid, and these were emulsified and dispersed with ultrasound under stirring at 60°C for 15 minutes. After the interior of the reaction flask was purged with nitrogen, a solution containing 0.24 g of lauryl mercaptan, 0.48 g of 2,2-azobis(2-amidinopropane)dihydrochloride (hereinafter, designated as V-50) and 9 g of water was added. Reaction was made at 60°C for 5 hours, thereby obtaining non-fluorine water-repellent and oil-resistant agent z1 (bio-based carbon content 2%, solid content concentration 30% by mass) as an aqueous dispersion of a non-fluorine compound (homopolymer of StA).

### (2) Preparation of treatment liquid z1

5 g of non-fluorine water-repellent and oil-resistant agent z1 obtained, 1 g of a cross-linking agent, and 94 g of water were mixed, thereby obtaining treatment liquid z1 containing non-fluorine water-repellent and oil-resistant agent z1.

### (3) Production of cloth product

A cloth product was obtained in the same manner as in Example 1 except that treatment liquid z1 was used instead of treatment liquid A.

### [Evaluation]

The cloth products obtained were evaluated as follows. The evaluation results are shown in Table 2 and 3.

### (Water-repellency)

Water-repellency of the cloth products obtained were evaluated according to the spray method of JIS L-1092 (AATCC-22). The rating is indicated by Water-repellency No. shown in Table 1. A higher score refers to better water-repellency.

A state located between each Water-repelling Nos., in the evaluation, may be represented at intervals of 5. For example, a state between Water-repelling No. 90 and Water-repelling No. 100 is represented as Water-repelling No. 95 and a state between Water-repelling No. 80 and Water-repelling No. 90 is represented as Water-repelling No. 85.

**[Table 1]**

| Water-repellency No. | State |
|---|---|
| 100 | Not wet and no attachment of droplets on front surface |
| 90 | Not wet but attachment of small droplets on front surface |
| 80 | Wet by individual small droplets on front surface |
| 70 | Wet on half of front surface, and individual small wet permeating into cloth |
| 50 | Wet on whole front surface |
| 0 | Wet on whole front surface and rear surface |

### (Durability of water-repellency)

The same evaluation as described above was made with respect to water-repellency after each of the cloth products obtained was washed repeatedly five times and water-repellency after each of the cloth products obtained was washed repeatedly ten times, according to JIS L-0217 103.

**[Table 2]**

| | | Example | | | | | |
|---|---|---|---|---|---|---|---|
| | | 1 | 2 | 3 | 4 | 5 | 6 |
| Polymer formulation | | StA | StA/VC M | StA | StS/GMA | StA/VCM/ DAAM | StA/VCM/ DAAM |
| Raw materia l monom er | StA | Bio-based | Bio-based | Bio-based | Bio-based | Bio-based | Bio-based |
| | VCM | | Non-bio-based | | | Non-bio-based | Non-bio-based |
| | GMA | | | | Non-bio-based | | |
| | DAAM | | | | | Non-bio-based | Non-bio-based |
| Surfactant (cationic) | | Bio-based | Bio-based | Non-bio-based | Bio-based | Bio-based | Bio-based |
| Surfactant (nonionic) | | Non-bio-based | Non-bio-based | Non-bio-based | Bio-based Non-bio-based | Bio-based Bio-based | Bio-based Bio-based |
| Bio-based carbon content of water-repellent and oil-resistant agent | | 70% | 60% | 67% | 69% | 60% | 64% |
| Water-repellen cy (No.) | Initial | 100 | 100 | 100 | 100 | 100 | 100 |
| | Washe d five times | 90 | 100 | 90 | 95 | 100 | 100 |
| | Washe d ten times | 90 | 90 | 90 | 90 | 95 | 95 |

**[Table 3]**

| | | Comparative Example | | |
|---|---|---|---|---|
| | | 1 | 2 | 3 |
| Polymer formulation | | 13FClA | WAX | StA |
| Raw material monomer | StA | | | Non-bio-based |
| | VCM | | | |
| | GMA | | | |
| | DAAM | | | |
| Surfactant (cationic) | | Bio-based | Non-bio-based | Bio-based |
| Surfactant (nonionic) | | Non-bio-based | Non-bio-based | Non-bio-based |
| Bio-based carbon content of water-repellent and oil-resistant agent | | 3% | 0.20% | 2% |
| Water-repellency (No.) | Initial | 100 | 90 | 100 |
| | Washed five times | 90 | 80 | 90 |
| | Washed ten times | 80 | 80 | 90 |

### [Example 7]

### (1) Preparation of non-fluorine water-repellent and oil-resistant agent G

Non-fluorine water-repellent and oil-resistant agent B (bio-based carbon content 60%, solid content concentration 30% by mass) obtained in the same manner as in Example 2 and a petroleum-based water-repellent and oil-resistant agent (bio-based carbon content 0.2%, solid content concentration 30% by mass) as an aqueous dispersion of paraffin wax, obtained in the same manner as in Comparative Example 2, were mixed at a mass ratio of 80:20, thereby obtaining non-fluorine water-repellent and oil-resistant agent G (bio-based carbon content 48%, solid content concentration 30% by mass).

### (2) Preparation of treatment liquid G

5 g of non-fluorine water-repellent and oil-resistant agent G obtained, 1 g of a cross-linking agent, and 94 g of water were mixed, thereby obtaining treatment liquid G containing non-fluorine water-repellent and oil-resistant agent G.

### (3) Production of cloth product

A cloth product was obtained in the same manner as in Example 1 except that treatment liquid G was used instead of treatment liquid A.

### [Comparative Example 4]

### (1) Preparation of non-fluorine water-repellent and oil-resistant agent z2

Non-fluorine water-repellent and oil-resistant agent B (bio-based carbon content 60%, solid content concentration 30% by mass) obtained in the same manner as in Example 2 and a petroleum-based water-repellent and oil-resistant agent (bio-based carbon content 0.2%, solid content concentration 30% by mass) as an aqueous dispersion of paraffin wax, obtained in the same manner as in Comparative Example 2, were mixed at a mass ratio of 50:50, thereby obtaining non-fluorine water-repellent and oil-resistant agent z2 (bio-based carbon content 30%, solid content concentration 30% by mass).

### (2) Preparation of treatment liquid z2

5 g of non-fluorine water-repellent and oil-resistant agent z2 obtained, 1 g of a cross-linking agent, and 94 g of water were mixed, thereby obtaining treatment liquid z2 containing non-fluorine water-repellent and oil-resistant agent z2.

### (3) Production of cloth product

A cloth product was obtained in the same manner as in Example 1 except that treatment liquid z2 was used instead of treatment liquid A.

### [Evaluation]

Water-repellency of the cloth products obtained were evaluated in the same manner as described above. The evaluation results are shown in Table 4. Table 4 also shows the results in Example 2 and Comparative Example 2.

**[Table 4]**

| | | Example | | Comparative Example | |
|---|---|---|---|---|---|
| | | 2 | 7 | 2 | 4 |
| Non-fluorine water-repellent and oil-resistant agent B (mass proportion) | | 100 | 80 | 0 | 50 |
| Petroleum-based water-repellent and oil-resistant agent (mass proportion) | | 0 | 20 | 100 | 50 |
| Bio-based carbon content of water-repellent and oil-resistant agent | | 60% | 48% | 0.20% | 30% |
| Water-repellency (No.) | Initial | 100 | 100 | 90 | 100 |
| | Washed five times | 100 | 95 | 80 | 90 |
| | Washed ten times | 90 | 90 | 80 | 80 |

### [Example 8]

### (1) Preparation of treatment liquid H

Non-fluorine water-repellent and oil-resistant agent A produced in the same manner as in Example 1, starch (bio-based carbon content 40% or more) and water were mixed, thereby obtaining treatment liquid H (bio-based carbon content 70%). The concentration of the solid content of non-fluorine compound a was 2.4% by mass and the concentration of the solid content of the starch was 7% by mass.

### (2) Production of paper product

Mixed were 60% by mass of LBKP (leaf bleached kraft pulp) and 40% by mass of NBKP (needle bleached kraft pulp), thereby preparing a pulp slurry in which the freeness of pulp was 400 ml (Canadian Standard Freeness). After a wet paper strengthening agent and a sizing agent were added to the pulp slurry obtained, paper having a density of 0.58 g/cm³ and a basis weight of 45 g/m² was produced by a fourdrinier paper machine. The paper obtained was subjected to size press treatment with treatment liquid H, and then dried by a drum dryer, thereby obtaining a paper product (processed paper).

### [Example 9]

Treatment liquid I and a paper product were obtained in the same manner as in Example 8 except that non-fluorine water-repellent and oil-resistant agent B produced in the same manner as in Example 2 was used instead of non-fluorine water-repellent and oil-resistant agent A.

### [Comparative Example 5]

Treatment liquid x2 and a paper product were obtained in the same manner as in Example 8 except that a fluorine-containing water-repellent and oil-resistant agent produced in the same manner as in Comparative Example 1 was used instead of non-fluorine water-repellent and oil-resistant agent A.

### [Comparative Example 6]

Treatment liquid y2 and a paper product were obtained in the same manner as in Example 8 except that a petroleum-based water-repellent and oil-resistant agent produced in the same manner as in Comparative Example 2 was used instead of non-fluorine water-repellent and oil-resistant agent A.

### [Evaluation]

The paper products obtained were evaluated as follows. The evaluation results are shown in Table 6.

### (Oil-resistance (KIT method))

Oil-resistance (KIT method) was evaluated according to the method of TAPPI T-559cm-02. A KIT test liquid used was obtained by mixing castor oil, toluene, and heptane at a ratio in Table 3. Specifically, one droplet of the KIT test liquid was dropped on paper, and a state of permeation of the KIT test liquid after 15 seconds was observed. The largest numerical number of oil-resistivity, of such any KIT test liquid which did not permeate into a paper product, was defined as oil-resistance of the paper product. A larger numerical number of oil-resistivity of the KIT test liquid refers to higher oil-resistance.

**[Table 5] Mixing ratio (% by volume)**

| Oil-resistivity (KIT test liquid) | Castor oil | Toluene | Heptane |
|---|---|---|---|
| 1 | 100 | 0 | 0 |
| 2 | 90 | 5 | 5 |
| 3 | 80 | 10 | 10 |
| 4 | 70 | 15 | 15 |
| 5 | 60 | 20 | 20 |
| 6 | 50 | 25 | 25 |
| 7 | 40 | 30 | 30 |
| 8 | 30 | 35 | 35 |
| 9 | 20 | 40 | 40 |
| 10 | 10 | 45 | 45 |
| 11 | 0 | 45 | 55 |
| 12 | 0 | 50 | 50 |

**[Table 6]**

| | Example | | Comparative Example | |
|---|---|---|---|---|
| | 8 | 9 | 5 | 6 |
| Polymer formulation | StA | StA/VCM | 13FClA | WAX |
| Bio-based carbon content of water-repellent and oil-resistant agent | 70% | 60% | 0.20% | 0.20% |
| Oil-resistance (oil-resistivity No.) | 3 | 3 | 6 | 2 |

### Industrial Applicability

The water-repellent and oil-resistant agent of the present disclosure is suitable as a treatment agent for various products demanded to have water-repellency and/or oil-resistance.

The present application claims the priority based on Japanese Patent Application No. 2022-208714 filed on December 26, 2022, the entire content of which is herein incorporated by reference.

## Claims

1. A water-repellent and oil-resistant agent comprising a non-fluorine compound as a main component and a liquid medium, wherein
a bio-based carbon content according to ASTM D6866 is 40% or more.

2. The water-repellent and oil-resistant agent according to claim 1, wherein the non-fluorine compound has a hydrocarbon group having 7 to 40 carbon atoms.

3. The water-repellent and oil-resistant agent according to claim 1 or 2, wherein the non-fluorine compound is a polymer containing a repeating unit derived from a (meth)acrylic monomer (a) having a hydrocarbon group having 7 to 40 carbon atoms and a (meth)acryloyl group.

4. The water-repellent and oil-resistant agent according to claim 3, wherein the (meth)acrylic monomer (a) is represented by the following general formula:
CH₂=C(-X¹)-C(=O)-Y¹(R¹)ₖ
wherein
X¹ is a hydrogen atom, a monovalent organic group or a halogen atom other than fluorine,
Y¹ is a group constituted from at least one or more selected from a di- to tetravalent hydrocarbon group having one carbon atom, -C₆H₄-, -O-, -C(=O)-, - S(=O)₂- and -NH-,
each R¹ is independently a hydrocarbon group having 7 to 40 carbon atoms, and
k is an integer of 1 to 3.

5. The water-repellent and oil-resistant agent according to claim 3 or 4, wherein the non-fluorine compound is a homopolymer of the (meth)acrylic monomer (a).

6. The water-repellent and oil-resistant agent according to claim 3 or 4, wherein the non-fluorine compound is a copolymer of the (meth)acrylic monomer (a) and any other monomer having a polymerizable group, and
the any other monomer is at least one selected from the group consisting of (b) a (meth)acrylate ester monomer,
(c) a non-fluorine crosslinkable monomer, and
(d) an olefin monomer containing a halogen atom other than fluorine.

7. The water-repellent and oil-resistant agent according to any one of claims 1 to 6, for application to a fiber structure.

8. A method for producing a textile product, comprising applying the water-repellent and oil-resistant agent according to any one of claims 1 to 7, to a fiber structure, to attach the non-fluorine compound to the fiber structure.

9. A textile product in which the non-fluorine compound comprised in the water-repellent and oil-resistant agent according to any one of claims 1 to 7 is attached.
